# EUROPÄISCHE PATENTANMELDUNG

(11) **EP 1 619 289 A1**
(43) Veröffentlichungstag der Anmeldung: **25.01.2006**
(21) Anmeldenummer: 05106513.4
(22) Anmeldetag: 15.07.2005
(51) Int. Cl.: D06F 39/02

(54) **Waschmitteleinspüleinrichtung für ein wasserführendes Haushaltgerät**

(30) Priorität: 22.07.2004 DE 202004011469 U
(71) Anmelder: BSH Bosch und Siemens Hausgeräte GmbH, 81739 München (DE)
(72) Erfinder: Bolduan, Edwin, 13629 Berlin (DE); Schlitzer, Alexander, 13469 Berlin (DE); Wiemer, Horst, 14532 Kleinmachnow (DE)

(57) **Zusammenfassung**

In einem wasserführenden Haushaltgerät, beispielsweise einer Waschmaschine, hat eine Waschmitteleinspüleinrichtung 1 einen Anschluss 9 für die Zuleitung oder Ableitung von Flüssigkeit, die unter einem statischen Druck von höchstens 20 kPa steht und die durch eine Schlauchleitung 10 zu einer anderen Quelle oder Senke innerhalb des Haushaltgerätes geführt werden kann.

Um interne Steckverbindungen für Schlauchleitungen 10 der vorstehenden Art dahingehend zu verbessern, dass ihre Montage durch sicheres Führen und Positionieren der zu fügenden Teile sowie durch beim Fügen der Teile durch geringe aufzuwendende Kräfte erleichtert wird, ist vorgesehen, dass der Anschluss 9 wenigstens teilweise eine zylinderförmige Innenwand aufweist und die Schlauchleitung 10 aus einem Wellschlauch besteht, der an seinem anschlussseitigen Ende mit einer warm angeformten Hülse 11 etwa gleichen Durchmessers wie die Innenwand des Anschlusses 9 versehen ist, die wenigstens eine ringförmige Rille 12 zur Aufnahme eines in sich geschlossenen Ringes 13 aus einem weichelastischen Werkstoff enthält.

## Beschreibung

Die vorliegende Erfindung betrifft eine Waschmitteleinspüleinrichtung für ein wasserführendes Haushaltgerät mit einem Anschluss für die Zuleitung oder Ableitung von Flüssigkeit, die unter einem statischen Druck von höchstens 20 kPa steht und die durch eine Schlauchleitung zu einer anderen Quelle oder Senke innerhalb des Haushaltgerätes geführt werden kann.

Üblicherweise werden bei wasserführenden Haushaltgeräten bei der geräteinternen Wasserführung und bei der Abführung des Schmutzwassers bzw. der Lauge in das Abwassernetz elastische Schläuche aus Kunststoff oder Gummi eingesetzt. Dabei ist es notwendig, dass die Verbindungen der Rohr- bzw. Schlauchenden mit den Baugruppen bzw. Komponenten der Haushaltgeräte betriebssicher sind, d.h. sie müssen allen auftretenden mechanischen Belastungen, insbesondere den beim Waschen und Schleudern vom Antrieb der Trommel übertragenen Schwingungen, standhalten und im Rahmen von verhältnismäßig geringen Anforderungen auf Dauer dicht sein.

Im Falle von Verbindungen zwischen einem Hauswassernetzventil und einem angeschlossenen Schlauchende sind Steckrastverbindungen geläufig. Gegenüber anderen bekannten Verbindungsarten haben Steckrastverbindungen den Vorteil, dass die Dichtelemente und die Elemente zur mechanischen Absicherung der Verbindung in den zu verbindenden Teilen integriert sind, so dass weitere Einzelteile nicht benötigt werden. Die Herstellung der Verbindung wird auch wesentlich dadurch vereinfacht, dass das Fügen der Einzelteile, das Abdichten der gefügten Teile und Sichern der Steckrastverbindung mit einer einzigen Schubbewegung ohne Werkzeug und nur mit einer Hand ausführbar sind. Diese Vorteile wirken sich wesentlich bei der Gerätemontage in der Endfertigung aus, insbesondere durch eine Verkürzung der Durchlaufzeit.

Eine Steckrastverbindung für flüssige oder gasförmige Medien ist aus der DE 33 22 202 A1 bekannt. Gemäß der darin offenbarten Lösung wird eine steckbare, dichte und kraftschlüssige Verbindung dadurch erreicht, dass das zu verbindende Rohr in ein mit Dicht- und Sicherungselementen ausgestattetes Anschlussteil gedrückt wird. Die der mechanischen Sicherung der Verbindung dienenden Federelemente sind keilförmig ausgebildet, sie werden beim Einschub des Rohres durch Schrägstellen geweitet und verkeilen sich bei axialer Zugbelastung im eingeschobenen Rohrende.

Da bei elastischem Material die Sicherung der Verbindung durch die Federelemente nicht gewährleistet werden kann, ist der Einsatz des Rohrstecksystems gemäß der DE 33 22 202 A1 eingeschränkt auf Rohre bzw. Schläuche mit harter Außenoberfläche. Nachteilig ist weiterhin, dass ein Lösen der Verbindung sehr aufwendig und ohne ein Spezialwerkzeug oder ein Zusatzelement nicht ausführbar ist.

In der DE 100 31 166 A1 wird eine in Haushaltgeräten universell einsetzbare Steckrastverbindung für Wellrohrschläuche beschrieben, die einen einfachen Verriegelungsmechanismus aufweist, der ohne Werkzeug oder Zusatzelement wieder gelöst werden kann.

Diese bekannte Steckrastverbindung besteht aus einem Ansatzstück für den Anschluss an einen Wellrohrschlauch und einer an die einzelnen Komponenten der Wasserführung anschließbare Buchse, die beide durch Ineinanderstecken miteinander verbindbar sind. Das hohlzylindrische Ansatzstück ist einseitig mit einem Wellrohrschlauch fest verbunden oder einstückig angeformt. An seiner Außenseite weist das Ansatzstück radial umlaufende Rippen auf. In Richtung des Endes des Ansatzstückes sind Nuten vorgesehen, die zur Aufnahme von O-Ring-Dichtungen dienen, die die Steckrastverbindung abdichten. Die hohlzylinderförmige Buchse weist lamellenartige Halteelemente auf, die in regelmäßigen Abständen radial im Innern der Buchse angeordnet sind. An den unteren Enden der lamellenartigen Halteelemente ragt jeweils ein Vorsprung nach innen.

Zur Herstellung der Steckrastverbindung wird das am oberen Ende des Wellrohrschlauches angeformte hohlzylinderförmige Ansatzstück in die Buchse eines Anschlussstückes geschoben. Die Vorsprünge am Ende der Buchse werden beim Fügen des Ansatzstückes auseinander gedrückt, um die Montage zu erleichtern. In der Füge-Endposition bewirken die Vorsprünge eine Verriegelung mit den Rippen des Ansatzstücks. Dadurch wird eine kraftschlüssige Verbindung geschaffen. Zur Entriegelung können die Vorsprünge mit geringem Kraftaufwand radial nach außen bewegt werden, womit die Steckrastverbindung leicht zu lösen ist.

Der Erfindung liegt die Aufgabe zugrunde, die aus dem Stand der Technik bekannten Steckverbindungen dahingehend zu verbessern, dass sie für den Einsatz bei Wasserführungen in der Peripherie von Waschmitteleinspüleinrichtungen brauchbar sind, in der die Dichtungsanforderungen nur bis etwa 20 kPa zu erfüllen sind, und die Montage der Steckverbindung durch sicheres Führen und Positionieren der zu fügenden Teile sowie durch beim Fügen der Teile geringe aufzuwendende Kräfte erleichtert wird.

Die Aufgabe wird erfindungsgemäß durch die im Anspruch 1 angegebenen Merkmale gelöst. Vorteilhafte Ausgestaltungen und Weiterbildungen der Erfindung ergeben sich aus den nachfolgenden Unteransprüchen.

Bei der erfindungsgemäßen Waschmitteleinspüleinrichtung weist ihr Anschluss wenigstens teilweise eine zylinderförmige Innenwand auf und besteht die Schlauchleitung aus einem Wellschlauch, der an seinem anschlussseitigen Ende mit einer warm angeformten Hülse etwa gleichen Durchmessers wie die Innenwand des Anschlusses versehen ist, die wenigstens eine ringförmige Rille zur Aufnahme eines in sich geschlossenen Ringes aus einem weichelastischen Werkstoff enthält.

In einer besonders vorteilhaften Ausgestaltung der Erfindung weist die Hülse an ihrem schlauchseitigen Mund ein Rastelement auf, das in Montageposition der Schlauchleitung eine ringförmige Ausformung der Schlauchleitung bzw. der Hülse hintergreift. Wenn die Rastelemente am schlauchseitigen Mund nach außen wirken, werden sie von innen her mit ringförmigen Ausformungen der Schlauchleitung, die auf deren Innenseite angebracht sind, zusammenwirken und vice versa werden entsprechend nach innen wirkende Rastelemente mit außen angebrachten ringförmigen Ausformungen der Schlauchleitung zusammenwirken.

Weiterhin kann die Erfindung dahingehend verbessert werden, dass der Außenquerschnitt der Hülse axial und in Richtung zu seinem freien Ende zwei- oder mehrfach abgestuft ist und dazu komplementär der Innenquerschnitt des Anschlusses axial in Richtung zur Öffnung zwei- bzw. mehrstufig erweitert ist, und dass die Steckverbindung je Stufe mindestens ein Dichtelement aufweist. Dadurch ist eine Lagesicherung der Hülse in dem Anschluss gewährleistet und die Dichtelemente je Stufe sind gleichmäßiger und besser reproduzierbar belastet, wodurch die Dichtung der Steckverbindung länger haltbar ist.

Weitere Vorteile und konstruktive Einzelheiten der Erfindung ergeben sich aus den Ausführungsbeispielen, die nachfolgend unter Bezugnahme auf die Zeichnungen beschrieben wird. Die Zeichnungen bilden die Ausführungsformen der erfindungsgemäßen Steckverbindung in Schnittansicht ab. Im Einzelnen zeigen
- Fig. 1: eine Waschmitteleinspüleinrichtung mit einem erfindungsgemäß gestalteten Anschluss für einen Wellrohrschlauch von oben betrachtet,
- Fig. 2: eine Detailansicht der Schlauchverbindung mit über ihre Länge einheitlichem Durchmesser der Hülse gemäß Einzelheit II in Fig. 1,
- Fig. 3: einen Längsschnitt durch eine andere Ausführungsform für einen zweistufigen Anschluss und eine zweistufige Hülse kurz vor der endgültigen Fügeposition und
- Fig. 4: die Ausführungsform gemäß Fig. 3 in Fügeposition.

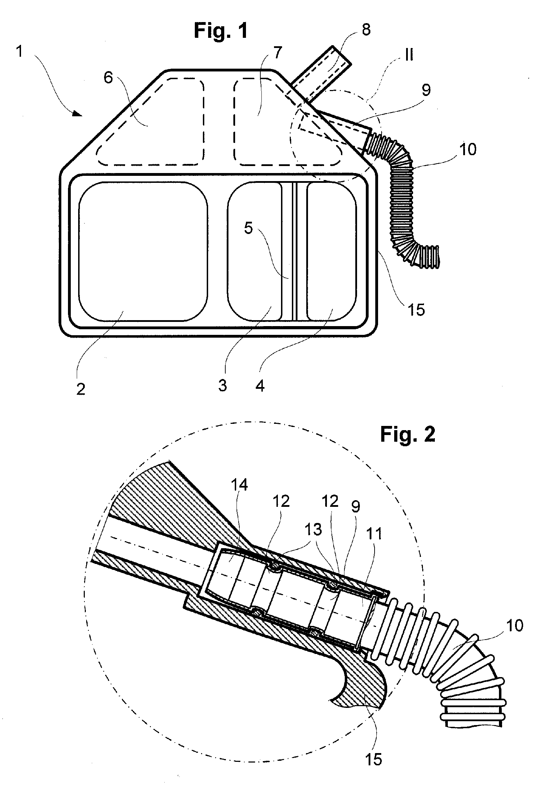

Die in Fig. 1 dargestellte Waschmitteleinspüleinrichtung 1 ist eine von jener Art, die aus einer alle Einzelheiten umfassenden Gehäuseschale gebildet ist und damit in eine Höhlung einer oberen Abschlussplatte einer nicht dargestellten Waschmaschine eingesenkt ist. Sie hat drei Waschmittel kammern 2 bis 4, wovon nach Bedarf auch die Waschmittelkammer 2 noch mit einer Zwischenwand in zwei Kammern unterteilt werden kann, wie die Kammern 3 und 4 durch eine Trennwand 5 aus einer ursprünglich gemeinsamen Kammer entstanden sind. Die oberen, gestrichelt dargestellten Kammern 6 und 7 dienen in nicht näher dargestellter Weise der Wasserverteilung des durch den Zuführstutzen 8 zugeführten Wassers im Inneren der Waschmitteleinspüleinrichtung 1 bzw. zur Verteilung des Wasser-Waschmittel-Gemisches aus den Kammern 2 bis 4 durch eine nicht dargestellte Abflussleitung zum ebenfalls nicht dargestellten Laugenbehälter der Waschmaschine. Die Oberseite der Waschmitteleinspüleinrichtung kann durch eine hier nicht sichtbare Klappe oder einen Deckel verschlossen sein.

Ein in gleicher Weise oder ähnlich aufgebauter Stutzen 9 wie der Stutzen 8 kann beispielweise zum Abführen von Wasser durch einen Schlauch 10 an andere Stellen der Waschmaschine als die normale Wasser-Waschmittel-Führung dienen. Beispielsweise kann damit Wasser zu einer sogenannten Manschetten-Bespülung (hier ebenfalls nicht dargestellt) geführt werden. Dazu hat der Wellrohr-Schlauch 10 an seinem sichtbaren Ende eine Ausformung, die durch Wärmeeinwirkung und Formung bis zum Abkühlen hergestellt werden kann. Durch die Ausformung wird ein Hülse 11 (Fig. 2) gebildet, die einstückiger Bestandteil des Wellrohr-Schlauches 10 ist. Diese Hülse 11 ist im Wesentlichen rohrförmig ausgebildet, hat aber im Abstand zueinander und im Abstand sowohl zur Wurzel als auch zum vorderen Hülsen-Ende je eine Ringnut 12, in die ein O-Ring 13 eingelegt ist. Am vorderen Ende hat die Hülse 11 einen sich verjüngenden Abschnitt 14, der das Einführen in den Anschluss 9 erleichtert. Durch die beabstandeten O-Ringe 13 wird die Hülse 11 koaxial im Anschlussstutzen 9 gehalten.

Der zugeordnete Anschlussstutzen 9 ist einstückiger Bestandteil des Gehäuses 15 der Wachmitteleinspüleinrichtung 1. Vorteilhafterweise ist die gesamte Steckverbindung aus Kunststoff gebildet. Damit verbinden sich die Vorteile einer gewissen Elastizität und einer hohen Lebensdauer. Gemäß der Erfindung ist Hülse 11 einstückig an den Wellrohrschlauch 10 angeformt, wodurch eine langlebige dichte Verbindung von Wellrohrschlauch und Ansatzstück erreicht wird. Gleichzeitig wird dadurch die Anzahl der miteinander zu verbindenden Einzelteile verringert.

Der Außenquerschnitt der Hülse 11 kann gemäß Fig. 3 und 4 - anders als in Fig. 1 und 2 - aber auch axial und in Richtung zu seinem freien Ende in zwei Stufen 16a und 16b abgestuft sein. Dazu komplementär ist der Innenquerschnitt des Anschlussstutzens 9 axial in zwei Stufen 17a und 17b erweitert. Im Außenmantel der Hülse 11 ist in jeder Stufe 16 a und 16b umlaufend eine Nut 12a bzw. 12b mit annähernd rechteckigem Querschnitt - hier mit geringerem Abstand als im Beispiel der Fig. 1 und 2 - eingearbeitet, in die die Dichtringe 13a und 13b nahezu spielfrei eingelegt sind.

Zur Verriegelung der positionierten Steckverbindung aus Hülse 11 und Anschlussstutzen 9 sind in der Hülse 11 nahe dem angeformten Wellrohrschlauch 10 eine Rastnut 18 und am Rand des Stutzens 9 mindestens eine Rastnase 19 vorhanden, die in der Füge-Endposition ineinander greifen und Hülse 11 und Anschlussstutzen 9 miteinander verriegeln. Durch die beim Fügen ausgeübte Schubkraft wird, unterstützt durch die nach innen gerichtete Abschrägung der Kanten vor den Stufen 16a und 16b, der elastische Rasthaken 19 nach außen gedrückt und gibt die Öffnung des Anschlussstutzens 9 frei. Zum Lösen der Steckverbindung sind nur geringe Kräfte erforderlich, um die Rastung zu entriegeln. Zur Begrenzung der Einschubtiefe beim Fügen von Anschlussstutzen 9 und Hülse 10 ist im Innern des Stutzens 9 ein Anschlag 20 vorhanden.

Eine andere, nicht dargestellte Rastverbindung hat anstelle des Rasthakens 19 im Innern des Stutzens 9 eine umlaufende Rastrippe, wozu der Stutzen 9 axial mehrfach geschlitzt ist, um ein problemloses Aufbiegen der Rastrippe beim Fügen und bei einem eventuell notwendigen Lösen der Verbindung zu ermöglichen

Wie aus den Darstellungen in Fig. 3 und 4 ersichtlich, werden die beiden Dichtringe 13a und 13b beim Fügevorgang nacheinander mit der entsprechenden Stutzen-Innenwand in Eingriff gebracht. Dadurch wird der Fügevorgang einfacher und ist mit geringerem Kraftaufwand auszuführen. Es kann vorteilhaft sein, die Reihenfolge anders zu wählen und zuerst die Quetschdichtung des Dichtrings 13a mit dem verengten Innenbereich 17a des Stutzens 9 herzustellen und dann den Dichtring 13b in den erweiterten Abschnitt 17b einzupressen. Im dargestellten Ausführungsbeispiel kann die Reihenfolge der zu realisierenden Quetschdichtungen in konstruktiv einfacher Weise dadurch umgekehrt werden, dass die Ringnut 12a für den Dichtring 13a dichter zum freien Ende der Hülse 11 eingebracht wird und der Abstand der zweiten Ringnut 12b zum angeformten Wellrohrschlauch 10 verkleinert wird.

In Fig. 3 ist die Hülse 11 so weit eingeschoben, dass das angefaste freie Ende am Abschnitts 14 der Hülse 11 und die Fase der Stufenkante des Stutzens 9 unmittelbar im Eingriff sind. Damit sind die Hülse 11 und der Anschlussstutzen 9 eng toleriert positioniert. Beim Fortsetzen des Fügevorgangs wird das abgestufte Hülsen-ende 16a weitestgehend selbstpositionierend in den verengten Bereich 17a des Stutzens 9 eingeschoben und eine erste Quetschdichtung durch das Eindrücken des Dichtringes 13b in den erweiterten Bereich 17b des Stutzens 9 hergestellt.

In Fig. 4 ist die Endposition der Steckverbindung hergestellt. Die maximale Einschubtiefe der Hülse 11 im Stutzen 9 ist begrenzt durch einen Anschlag 20 im Stutzen und/oder durch die aneinander stoßenden Kanten der Abstufungen 16 und 17 der Hülse 11 bzw. des Stutzens 9. In der Zeichnung sind aus Darstellungsgründen beide Möglichkeiten realisiert. Dieser zweifache Anschlag ist für die praktische Ausführung nicht erforderlich. Bei genau dimensionierten und in der Form aufeinander abgestimmten komplementär gestalteten Abstufungen 16 und 17 von Hülse 11 und Stutzen 9 ist ein gesonderter Anschlag 20 nicht erforderlich. Andererseits bietet ein gesonderter Anschlag Freiräume bei der Dimensionierung der Abstufungen 16 und 17.

## Patentansprüche

1. Waschmitteleinspüleinrichtung für ein wasserführendes Haushaltgerät mit einem Anschluss für die Zuleitung oder Ableitung von Flüssigkeit, die unter einem statischen Druck von höchstens 20 kPa steht und die durch eine Schlauchleitung zu einer anderen Quelle oder Senke innerhalb des Haushaltgerätes geführt werden kann, **dadurch gekennzeichnet, dass** der Anschluss wenigstens teilweise eine zylinderförmige Innenwand aufweist und die Schlauchleitung aus einem Wellschlauch besteht, der an seinem anschlussseitigen Ende mit einer warm angeformten Hülse etwa gleichen Durchmessers wie die Innenwand des Anschlusses versehen ist, die wenigstens eine ringförmige Rille zur Aufnahme eines in sich geschlossenen Ringes aus einem weichelastischen Werkstoff enthält.

2. Waschmitteleinspüleinrichtung nach Anspruch 1, **dadurch gekennzeichnet, dass** die Hülse an ihrem schlauchseitigen Mund ein Rastelement aufweist, dass in Montageposition der Schlauchleitung eine ringförmige Ausformung der Schlauchleitung bzw. der Hülse hintergreift.

3. Waschmitteleinspülvorrichtung nach Anspruch 1 oder 2, **dadurch gekennzeichnet, dass** der Außenquerschnitt der Hülse (1) axial und in Richtung zu seinem freien Ende zwei- oder mehrfach abgestuft ist und dazu komplementär der Innenquerschnitt des Anschlusses (2) axial in Richtung zur Öffnung zwei- bzw. mehrstufig erweitert ist, und dass die Steckverbindung je Stufe (3, 4) mindestens ein Dichtelement (5) aufweist.
